# DEMANDE DE BREVET EUROPEEN

(11) **EP 4 563 372 A1**
(43) Date de publication de la demande: **04.06.2025**
(21) Numéro de dépôt: 24216667.6
(22) Date de dépôt: 29.11.2024
(51) Int. Cl.: B60C 23/00, B60C 23/14

(54) **DISPOSITIF PNEUMATIQUE POUR JANTE DE ROUE ET SYSTÉME DE CONTROLE DE LA PRESSION D'UN PNEU ASSOCIÉ**

(30) Priorité: 01.12.2023 FR 2313469
(71) Demandeur: M2S-Teletyre, 75015 Paris (FR)
(72) Inventeur: Maquaire, Michel, 75015 PARIS (FR)
(74) Mandataire: Cabinet Célanie

(57) **Abrégé**

L'invention concerne un dispositif pneumatique (1) pour une jante de roue (10) adaptée pour fixer un corps de pneu (2) ayant une première zone de gonflage (2-1), une liaison pneumatique (20) et une enveloppe additionnelle (30) définissant une deuxième zone de gonflage, la liaison pneumatique comprend un premier actionneur (23-1), assurant le passage du fluide de la liaison pneumatique à la deuxième zone de gonflage ou de la deuxième zone de gonflage à la première zone de gonflage, un deuxième actionneur (23-2), assurant le passage du fluide dans la première zone de gonflage, dans lequel:
- le premier actionneur passe d'une configuration de gonflage à une configuration de regonflage, de sorte que le fluide passe de la deuxième zone de gonflage vers la première zone de gonflage,
- le deuxième actionneur est configuré pour empêcher le passage du fluide de la liaison pneumatique jusque dans la première zone de gonflage.

## Description

### Domaine technique

L'invention concerne le domaine de la gestion de la pression d'un pneumatique, et plus particulièrement le domaine des dispositifs ou systèmes intégrés dans une jante de roue. L'invention concerne un dispositif pneumatique pour jante comprenant un agencement de voies de communication fluidique et d'actionneurs permettant le gonflage ou le dégonflage d'une zone de gonflage additionnelle. L'invention porte en outre sur un système de contrôle de la pression d'un pneu comprenant le dispositif pneumatique pour jante et une station de gonflage.

### Technique antérieure

Ci-après, nous décrivons l'art antérieur connu à partir duquel l'invention a été développée.

Une des principales problématiques concernant l'utilisation de pneumatiques est liée au contrôle de leur pression. Un pneumatique surgonflé ou sous-gonflé aura tendance à s'user prématurément et pourra présenter un risque d'éclatement plus important qu'un pneumatique correctement gonflé. De nombreuses solutions permettant d'ajuster automatiquement la pression des pneumatiques à une pression de référence appropriée pour augmenter la durabilité et la sécurité d'un pneu ont déjà vu le jour.

Une première solution, décrite dans le document brevet n°EP0296017, a proposé d'intégrer dans un pneumatique classique une valve pneumatique destinée principalement au gonflage et au dégonflage d'un pneu par une source externe au pneumatique. La valve est commandée par un bloc pneumatique lui-même piloté automatiquement par un boîtier électronique ou manuellement par des boutons poussoirs.

D'autres solutions ont été proposés afin d'intégrer une réserve de gonflage additionnelle directement dans le pneumatique afin d'assurer un maintien de la pression optimale dans ledit pneumatique au cours de son utilisation.

Notamment, une deuxième solution, décrite dans le document brevet n°FR2879128, a proposé une réserve de gonflage additionnelle à ceux couramment intégrés au niveau des roues des véhicules pour réaliser les opérations de gonflage/dégonflage de pneumatiques et gérer ladite source de gonflage additionnel.

Cependant, dans cette solution la jante comprend un premier actionneur relié à la réserve de gonflage additionnelle par un conduit et un deuxième actionneur relié à la zone de gonflage du pneumatique par un autre conduit, les deux actionneurs étant en communication l'un avec l'autre. Ainsi, une telle solution reste limitée dans le cadre de l'ajustement de la pression du pneumatique via la réserve de gonflage additionnelle. En effet, un tel agencement ne permet pas un débit élevé et par voie de conséquence ne permet pas un regonflage rapide et optimal du pneumatique, par la réserve de gonflage additionnelle. De plus cette réserve de gonflage additionelle nécessite une modification structurelle de la jante, conduisant à un besoin d'homologation complémentaire, et cette solution n'est pas adaptée pour une implémentation sur tout type de jante.

Ainsi, il existe un besoin pour un dispositif pneumatique intégrable dans une jante capable de répondre aux problèmes engendrés par les dispositifs existants.

L'invention a pour but de remédier aux inconvénients de l'art antérieur. En particulier, l'invention a pour but de proposer en complément d'un premier système de régulation de la pression d'un pneumatique comprenant un composant pneumatique intégré au niveau des roues des véhicules pour réaliser les opérations de gonflage/dégonflage de celui-ci, un deuxième système de régulation comprenant un ou plusieurs composants pneumatiques additionnels et permettant de gérer une source d'air sous haute pression additionnelle. L'invention propose d'intégrer une réserve d'air sous haute pression pouvant être intégrée dans la jante et permettant, en relation avec une station de gonflage externe, de gonfler cette réserve d'air sous haute pression ou de regonfler le pneumatique par l'utilisation de cet air sous haute pression.

### Résumé de l'invention

L'invention vise à pallier ces inconvénients. Ce qui suit présente un résumé simplifié d'aspects, de modes de réalisation et d'exemples sélectionnés de la présente invention dans le but de fournir une compréhension de base de l'invention. Cependant, ce résumé ne constitue pas un aperçu exhaustif de tous les aspects, modes de réalisation et exemples de l'invention. Son seul but est de présenter des aspects, modes de réalisation et exemples sélectionnés de l'invention sous une forme concise en guise d'introduction à la description plus détaillée des aspects, modes de réalisation et exemples de l'invention qui suivent le résumé. Selon un premier aspect, l'invention porte sur un dispositif pneumatique pour jante de roue adaptée pour fixer un corps de pneu de manière à définir une première zone de gonflage, ledit dispositif comprenant une liaison pneumatique et une enveloppe additionnelle adaptée pour supporter une pression de service au moins trois fois supérieure à la pression maximale de la première zone de gonflage et définissant une deuxième zone de gonflage, l'enveloppe additionnelle étant en outre agencée pour entourer un élément de la jante de roue et communiquer fluidiquement avec la liaison pneumatique, ladite liaison pneumatique étant adaptée pour délivrer un fluide issu d'une station de gonflage, le dispositif pneumatique étant caractérisé en ce que la liaison pneumatique comprend une première voie de communication fluidique, reliée à un premier actionneur, assurant le passage du fluide de la liaison pneumatique jusque dans la deuxième zone de gonflage de l'enveloppe additionnelle par un conduit de gonflage relié au premier actionneur ou de la deuxième zone de gonflage de l'enveloppe additionnelle à la première zone de gonflage par un conduit de regonflage relié au premier actionneur et, une deuxième voie de communication fluidique, reliée à un deuxième actionneur, assurant le passage du fluide de la liaison pneumatique jusque dans la première zone de gonflage, et dans lequel:
- le premier actionneur est configuré pour passer d'une configuration dite de gonflage, dans laquelle le conduit de gonflage est en position ouverte et le conduit de regonflage est en position fermée, à une configuration dite de regonflage, dans laquelle les conduits de gonflage et de regonflage sont en position ouverte et dans laquelle la première voie de communication fluidique est obturée de sorte que la pression exercée dans la liaison pneumatique entraine le passage du fluide de la deuxième zone de gonflage vers la première zone de gonflage,
- le deuxième actionneur est configuré pour empêcher le passage du fluide de la liaison pneumatique jusque dans la première zone de gonflage, lorsque le premier actionneur est dans la configuration de gonflage ou de regonflage.

Selon d'autres caractéristiques optionnelles, le dispositif selon l'invention peut inclure une ou plusieurs des caractéristiques suivantes, seules ou en combinaison :
- l'élément de la jante de roue correspond à un pourtour d'une base creuse, de préférence le pourtour extérieur de la base creuse.
- l'enveloppe additionnelle est formée par un enroulement d'une structure tubulaire qui comprend une ou plusieurs spires.
- la structure tubulaire de l'enveloppe additionnelle comprend un diamètre intérieur allant de 10 mm à 250 mm, de préférence de 20 mm à 100 mm.
- l'enveloppe additionnelle est composée d'au moins un matériau adapté pour supporter plus de trois fois la pression de service maximale prévue pour le corps de pneu.
- la liaison pneumatique est reliée fluidiquement à un joint tournant à un seul passage pneumatique agencé pour délivrer le fluide issu de la station de gonflage aux première et deuxième voies de communication fluidique, ledit joint tournant étant en outre agencé pour faire la liaison entre une partie fixe de roue, de préférence un moyeu, et une partie tournante de roue.
- la jante de roue comprend un premier capteur configuré pour mesurer la pression de l'enveloppe additionnelle, le premier actionneur étant en outre configuré pour passer en configuration de gonflage lorsque la pression mesurée par le premier capteur est inférieure à un seuil prédéterminé.
- la jante de roue comprend un deuxième capteur configuré pour mesurer la pression de la première zone de gonflage, le premier actionneur étant en outre configuré pour passer en configuration de regonflage lorsque la pression mesurée par le deuxième capteur est inférieure à un seuil prédéterminé.

Selon un deuxième aspect, l'invention porte sur une roue de véhicule comprenant un dispositif pneumatique selon l'invention et une jante de roue.

Selon un troisième aspect, l'invention porte sur un système de contrôle de la pression d'un pneu comprenant une roue de véhicule équipée d'un pneu monté sur une jante de roue et un dispositif pneumatique selon l'invention, ledit système comprenant en outre une station de gonflage comportant un compresseur haute-pression relié fluidiquement à la liaison pneumatique, au moins un dispositif de commande électropneumatique configuré pour recevoir les mesures des premier et deuxième capteurs et pour :
- commander le passage du premier actionneur en configuration de gonflage lorsque la pression mesurée par le premier capteur est inférieure à un premier seuil prédéterminé et déclencher le compresseur haute pression de sorte que la pression de la deuxième zone de gonflage soit sensiblement égale à un seuil prédéterminé,
- commander le passage du premier actionneur en configuration de regonflage lorsque la pression mesurée par le deuxième capteur est inférieure à un deuxième seuil prédéterminé de sorte que la pression de la première zone de gonflage soit sensiblement égale à un seuil prédéterminé,
- commander le deuxième actionneur, simultanément au passage en configuration de gonflage ou de regonflage du premier actionneur, pour empêcher le passage du fluide de la liaison pneumatique jusque dans la première zone de gonflage.

Selon d'autres caractéristiques optionnelles, le système selon l'invention peut inclure :
- au moins un capteur tiers configuré pour déterminer une vitesse, une charge et/ou une typologie de sol, le dispositif de commande électropneumatique étant en outre configuré pour recevoir les mesures du capteur tiers et pour commander le passage du premier actionneur en configuration de gonflage ou de regonflage et commander le deuxième actionneur en fonction d'une valeur mesurée par le capteur tiers.

Selon un quatrième aspect, l'invention porte sur un véhicule comprenant un système de contrôle de la pression de pneus selon l'invention.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente une coupe schématique d'un premier mode de réalisation d'un dispositif pneumatique selon l'invention monté sur une jante de roue.
[Fig. 2] La figure 2 représente une coupe schématique d'un deuxième mode de réalisation d'un dispositif pneumatique selon l'invention monté sur une jante de roue.
[Fig. 3] La figure 3 représente une coupe schématique d'un troisième mode de réalisation d'un dispositif pneumatique selon l'invention monté sur une jante de roue.
Les figures ne respectent pas nécessairement les échelles, notamment en épaisseur, et ce à des fins d'illustration.

Des aspects de la présente invention sont décrits en référence à des schémas fonctionnels d'appareils (systèmes) selon des modes de réalisation de l'invention.

### Description des modes de réalisation

Ci-après, nous décrivons un résumé de l'invention et le vocabulaire associé, avant de présenter les inconvénients de l'art antérieur, puis enfin de montrer plus en détails comment l'invention y remédie.

Les termes « **fixe** », **« fixé** », ou « **fixer** », au sens de l'invention correspondent à l'association directe ou indirecte d'un élément par rapport à un autre sans mouvement de ces éléments l'un par rapport à l'autre, inamovible ou amovible avec un ou plusieurs éléments intermédiaires.

Le terme « **amovible** » au sens de l'invention correspond à la capacité à être détaché, enlevé ou démonté aisément sans avoir à détruire des moyens de fixation soit parce qu'il n'y a pas de moyen de fixation soit parce que les moyens de fixation sont aisément et rapidement démontables (e.g. encoche, vis, languette, ergot, clips). Par exemple, par amovible, il faut comprendre que l'objet n'est pas fixé par soudure ou par un autre moyen non prévu pour permettre de détacher l'objet.

Ainsi, l'invention concerne un dispositif pneumatique pour jante de roue, de préférence comportant une base creuse, adaptée pour fixer un corps de pneu de manière à définir une première zone de gonflage, une liaison pneumatique et une enveloppe additionnelle.

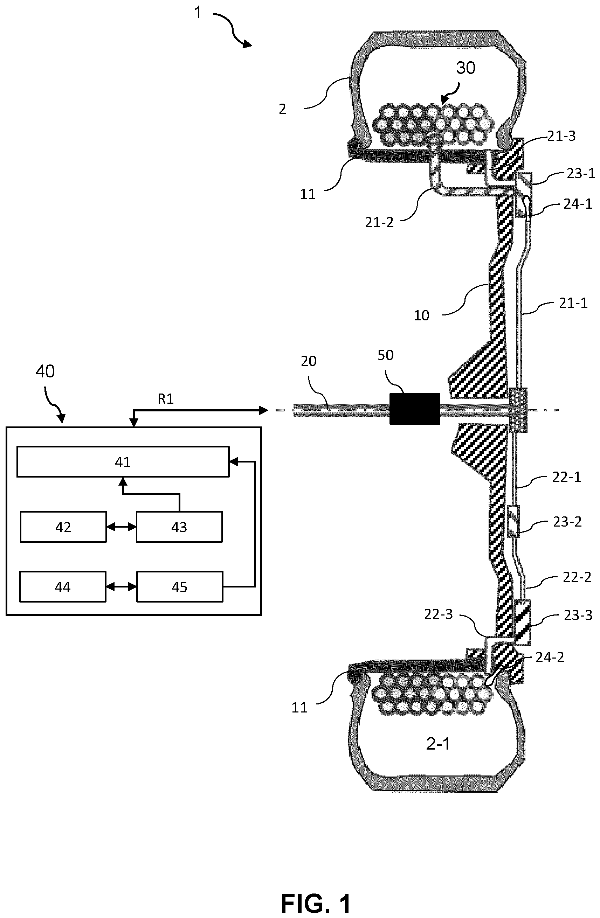

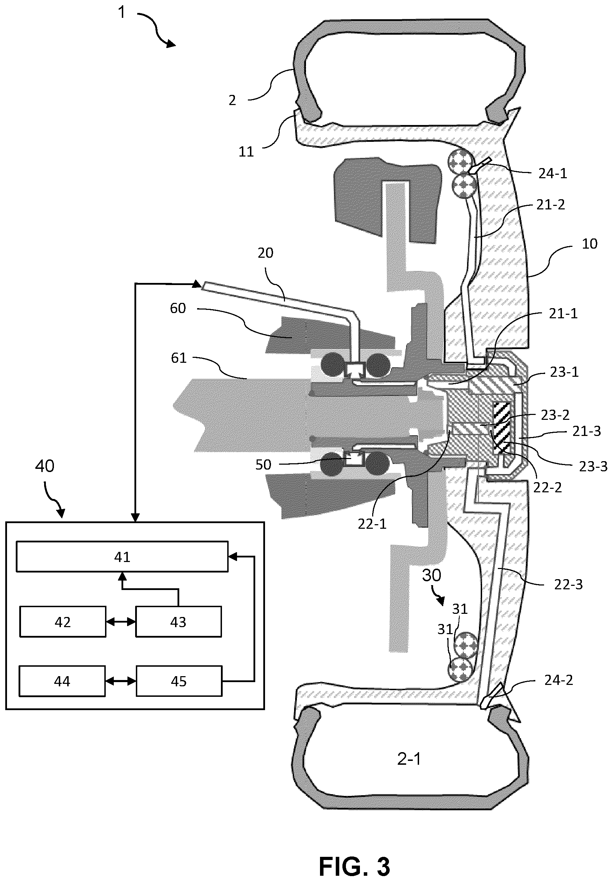

Comme décrit en lien avec les figures 1 à 3, le dispositif pneumatique 1 selon l'invention est adapté pour s'intégrer dans une jante de roue 10 sans nécessiter de modifier la structure de ladite jante qu'elle soit en une ou deux parties. En effet, l'intégration d'une réserve additionnelle sous haute pression dans une jante modifiée implique, lors de son utilisation, des fissurations et déformations.

Dans le cadre de l'invention, la jante de roue 10 est adaptée pour fixer un corps de pneu 2 de manière à définir une première zone de gonflage 2-1. Comme cela est bien connu, le corps de pneu 2 peut comprendre une partie agencée pour s'accrocher à la jante, plus connue sous le nom de « talon », cette partie permet le maintien du corps de pneu sur la jante de roue 10 une fois la première zone de gonflage 2-1 remplie d'air sous pression.

Selon l'invention, l'enveloppe additionnelle 30 est adaptée pour supporter une pression de service au moins 3 fois supérieure à la pression maximale de la première zone de gonflage. A titre d'exemples non limitatifs, l'enveloppe additionnelle 30 peut être adaptée pour supporter une pression de service d'au moins 9 bars, de préférence d'au moins 24 bars.

L'enveloppe additionnelle 30 définit une deuxième zone de gonflage agencée pour entourer un élément de la jante de roue 10. A titre d'exemples illustratifs, un élément de jante de roue 10 peut correspondre à tout élément structurel, interne ou externe de ladite jante tel que notamment une base creuse de jante, une partie de la face d'appui de la jante sur le moyeu, une cavité agencée dans la jante.

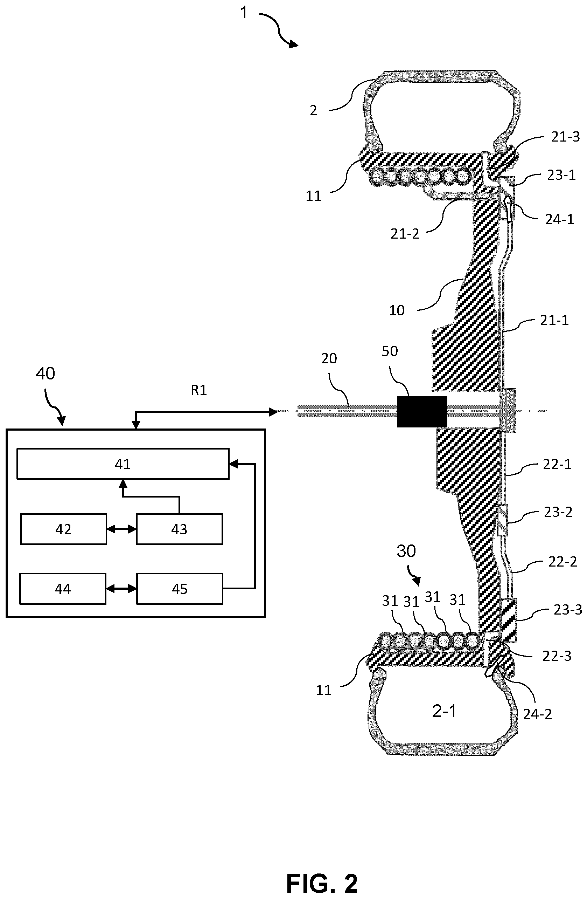

Comme on peut le constater dans le premier ou le deuxième mode de réalisation du dispositif pneumatique 1 de l'invention des figures 1 et 2, l'enveloppe additionnelle 30 peut être agencée pour entourer un pourtour de la base creuse 11.

Dans le premier mode de réalisation, l'enveloppe additionnelle 30 est agencée pour entourer le pourtour intérieur de la base creuse 11, c'est-à-dire directement dans la première zone de gonflage 2-1 du corps de pneu 2.

Dans le deuxième mode de réalisation, l'enveloppe additionnelle 30 est agencée pour entourer le pourtour extérieur de la base creuse 11, plus particulièrement du côté destiné à accueillir le pneu 2.

Dans le troisième mode de réalisation, l'enveloppe additionnelle 30 est agencée pour entourer le pourtour de la face interne de la jante de roue 10, c'est-à-dire directement sur le pourtour de la face d'appui de la jante qui est destiné à accueillir le moyeu et qui correspond à une partie qui n'est pas en contact avec le moyeu.

De manière générale, l'enveloppe additionnelle 30 peut être formée par un enroulement d'une structure tubulaire qui comprend une ou plusieurs spires 31.

En outre, l'enveloppe additionnelle 30 peut être composée d'au moins un matériau adapté pour supporter plus de 3 fois la pression de service maximale prévue pour le corps de pneu 2, par exemple constitué d'une couche tressée en fibres ou en inox, de préférence avec un revêtement intérieur en polytétrafluoroéthylène.

De manière avantageuse, afin d'assurer un débit de regonflage élevé de la première zone de gonflage 2-1 et un volume suffisant pour assurer un regonflage optimal, la structure tubulaire de l'enveloppe additionnelle 30 peut comprendre un diamètre intérieur allant de 10 mm à 250 mm, de préférence de 20 mm à 100 mm.

Un dispositif pneumatique selon l'invention comprend en outre une liaison pneumatique 20 communiquant fluidiquement avec l'enveloppe additionnelle 30. La liaison pneumatique 20 est adaptée pour délivrer un fluide issu d'une station de gonflage 40.

Dans l'invention, la liaison pneumatique 20 comprend une première voie de communication fluidique 21-1, reliée à un premier actionneur 23-1, assurant le passage du fluide de la liaison pneumatique 20 jusque dans la deuxième zone de gonflage de l'enveloppe additionnelle 30 par un conduit de gonflage 21-2 relié au premier actionneur 23-1. La première voie de communication fluidique 21-1 comprend également un conduit de regonflage 21-3 relié au premier actionneur 23-1 afin d'assurer le passage du fluide de la deuxième zone de gonflage de l'enveloppe additionnelle 30 à la première zone de gonflage 2-1.

Toujours dans l'invention, la liaison pneumatique 20 comprend en outre une deuxième voie de communication fluidique 22-1, reliée à un deuxième actionneur 23-2, assurant le passage du fluide de la liaison pneumatique 20 jusque dans la première zone de gonflage 2-1, par exemple via un conduit dédié 22-3.

Le premier actionneur 23-1 est configuré pour passer d'une configuration dite de gonflage à une configuration dite de regonflage. Le passage dans l'une ou l'autre des configurations de gonflage ou de regonflage du premier actionneur 23-1 peut être déclenchée selon l'application d'une pression prédéterminée pour chacune desdites configurations. Bien entendu, lorsque qu'aucune pression n'est appliquée dans la liaison pneumatique 20, le premier actionneur 23-1 et le deuxième actionneur 23-2 sont en position fermée.

De manière générale, les positions ou configurations évoquées en lien avec les actionneurs selon l'invention peuvent être mises en oeuvre par un agencement d'un ou plusieurs clapets de type connu.

Dans la position de gonflage, le conduit de gonflage 21-2 est en position ouverte et le conduit de regonflage 21-3 est en position fermée. Cela permet ainsi le passage du fluide dans l'enveloppe additionnelle 30. Le passage en position de gonflage, du premier actionneur 23-1, peut être initié lorsque la pression de l'enveloppe additionnelle 30 est inférieure à une valeur seuil prédéterminée.

La pression exercée dans la première voie de communication fluidique 21-1 au travers de la liaison pneumatique 20 permet ainsi le passage de l'actionneur 23-1 en position de regonflage. Dans la configuration de regonflage, les conduits de gonflage 21-2 et de regonflage 21-3 sont en position ouverte, le premier actionneur 23-1 permet ainsi une communication fluidique entre lesdits conduits de gonflage et de regonflage. Cela permet ainsi le passage du fluide de l'enveloppe additionnelle 30 vers la première zone de gonflage 2-1 à un débit élevé. Le passage en position de regonflage, du premier actionneur 23-1, peut être initié lorsque la pression du corps de pneu 2 est inférieure à une valeur seuil prédéterminée. En configuration de regonflage, le premier actionneur 23-1 est en outre configuré pour empêcher toute communication fluidique entre lesdits conduits de gonflage et de regonflage et la première voie de communication fluidique 21-1.

Le deuxième actionneur 23-2 d'un dispositif pneumatique 1 selon l'invention est configuré pour empêcher le passage du fluide de la liaison pneumatique 20 jusque dans la première zone de gonflage 2-1, lorsque le premier actionneur 23-1 est dans la configuration de gonflage ou de regonflage.

A titre d'exemples illustratifs, le premier actionneur 23-1 peut être configuré pour passer en configuration de gonflage lorsque le fluide délivré par la liaison pneumatique 20 est à une première pression de commande prédéterminée et en configuration de regonflage lorsque le fluide délivré par la liaison pneumatique 20 est à une deuxième pression de commande. En outre, le fluide délivré par la liaison pneumatique 20 peut être à une troisième pression de commande prédéterminée pour permettre le gonflage de la première zone de gonflage 2-1 ou à une quatrième pression de commande prédéterminée pour permettre le dégonflage de la première zone de gonflage 2-1. Le deuxième actionneur 23-2 peut être configuré pour empêcher le passage du fluide de la liaison pneumatique 20 lorsque le fluide délivré par la liaison pneumatique 20 est à la première ou à la deuxième pression de commande prédéterminée.

En complément, il est prévu que le dispositif pneumatique 1 selon l'invention puisse être implémenté dans un système de contrôle de la pression préexistant. Un système de contrôle de la pression préexistant peut par exemple comprendre un compresseur, un dispositif de commande électropneumatique, une liaison pneumatique une première voie de communication fluidique, une voie de communication fluidique intermédiaire, un actionneur et un capteur telles que les différentes caractéristiques représentées respectivement par les références 40, 43 ou 45, 20, 22-1, 22-2, 23-3 et 24-2 dans les figures 1 à 3. Dans le cadre de l'invention, le compresseur préexistant serait remplacé par un compresseur haute-pression. Ainsi, lorsqu'un système de contrôle de la pression préexistant équipe déjà un pneumatique, le deuxième actionneur 23-2 du dispositif pneumatique 1 y est ajouté et peut en outre être configuré pour être en position ouverte, lorsque le fluide délivré par la liaison pneumatique 20 est à une pression qui est inférieure à la première et à la deuxième pression de commande prédéterminée, permettant donc le passage du fluide de la liaison pneumatique 20 jusqu'au troisième actionneur 23-3 par la voie de communication fluidique intermédiaire 22-2 reliant fluidiquement les deuxième et troisième actionneurs 23-2, 23-3. De ce fait, lorsque le fluide délivré par la liaison pneumatique 20 est à une troisième pression de commande prédéterminée, qui est de préférence inférieure à la première pression de commande prédéterminée et à la deuxième pression de commande prédéterminée, le troisième actionneur 23-3 est configuré pour permettre le gonflage de la première zone de gonflage 2-1.

En outre, le fluide délivré par la liaison pneumatique 20 peut être à une quatrième pression de commande prédéterminée, inférieure à la troisième pression de commande prédéterminée, le troisième actionneur 23-3 est alors configuré pour permettre le dégonflage de la première zone de gonflage 2-1.

Optionnellement, la jante de roue 10 du dispositif pneumatique 1 selon l'invention peut comprendre un premier capteur 24-1 configuré pour mesurer la pression de l'enveloppe additionnelle 30, le premier actionneur 23-1 peut en outre être configuré pour passer en configuration de gonflage lorsque la pression mesurée par le premier capteur 24-1 est inférieure à un seuil prédéterminé. A titre d'exemple, le premier capteur peut communiquer la mesure de la pression de l'enveloppe additionnelle 30 à un dispositif de commande électropneumatique 43, 45 qui peut être configuré pour commander une pression adaptée pour que le premier actionneur 23-1 passe en configuration de gonflage.

En alternative ou en complément, la jante de roue 10 du dispositif pneumatique 1 selon l'invention peut comprendre un deuxième capteur 24-2 configuré pour mesurer la pression de la première zone de gonflage 2-1, le premier actionneur 23-1 peut en outre être configuré pour passer en configuration de regonflage lorsque la pression mesurée par le deuxième capteur 24-2 est inférieure à un seuil prédéterminé. A titre d'exemple, le deuxième capteur 24-2 peut communiquer la mesure de la pression de la première zone de gonflage 2-1 à un dispositif de commande électropneumatique 43, 45 qui peut être configuré pour commander une pression adaptée pour que le premier actionneur 23-1 passe en configuration de regonflage.

Dans un mode de réalisation optionnel du dispositif pneumatique 1 selon l'invention, la liaison pneumatique 20 peut être reliée fluidiquement à un joint tournant 50 à un seul passage pneumatique pour délivrer le fluide issu de la station de gonflage 40 aux première et deuxième voies de communication fluidique 21-1, 22-1. Le joint tournant 50 à un seul passage pneumatique peut en outre être agencé pour faire la liaison entre une partie fixe de roue, tel un moyeu 60, et une partie tournante 61 de roue. Un tel agencement permet d'intégrer le dispositif pneumatique 1 selon l'invention dans tout type de jante sans avoir besoin de modifier la structure de la jante. En outre, un joint tournant intégrant un seul passage pneumatique limite l'encombrement et la complexité d'intégration par rapport à un joint tournant à plusieurs passages.

Selon un deuxième aspect, l'invention porte sur une roue de véhicule comprenant un dispositif pneumatique 1 selon l'invention et une jante de roue 10, de préférence la jante de roue comprend un corps de pneu monté sur ladite jante.

Selon l'invention, la roue peut correspondre à tout type de roue telle que par exemple une roue intégrant un système de roulage à plat ou disposant d'un système de beadlock^{®} en étant démontable avec un voile boulonné.

Selon un troisième aspect, l'invention porte sur un système de contrôle de la pression d'un pneu comprenant une roue de véhicule équipée d'un pneu monté sur la jante de roue 10 du dispositif pneumatique 1 selon l'invention, une station de gonflage 40 et au moins un dispositif de commande électropneumatique 43, 45.

Dans le système selon l'invention, le dispositif pneumatique 1 comprend un dispositif pneumatique 1 selon l'invention équipé des premier et deuxième capteur 24-1, 24-2 respectivement configurés pour mesurer la pression de de l'enveloppe additionnelle 30 et de la première zone de gonflage 2-1. En outre, toujours dans le système selon l'invention, le premier actionneur 23-1 est en outre configuré pour passer en configuration de gonflage lorsque la pression mesurée par le premier capteur 24-1 est inférieure à un seuil prédéterminé et/ou pour passer en configuration de regonflage lorsque la pression mesurée par le deuxième capteur 24-2 est inférieure à un seuil prédéterminé.

La station de gonflage 40 du système selon l'invention comporte un compresseur haute-pression 41 relié fluidiquement à la liaison pneumatique 20. Le dispositif de commande électropneumatique 43, 45 est en outre configuré pour recevoir les mesures des premier et deuxième capteurs 24-1, 24-2 et pour commander les actionneurs 23-1, 23-2 et/ou 23-3.

La commande des actionneurs 23-1, 23-2 et/ou 23-3 peut être automatique, notamment lorsque les valeurs de pression mesurées par les premier et deuxième capteurs 24-1, 24-2 sont inférieures à des seuils prédéterminés comme décrit précédemment en lien avec le dispositif pneumatique 1.

En outre, il est prévu dans le cadre de l'invention que les fonctions décrites en lien avec les deuxième et troisième actionneur 23-2, 23-3 puissent être implémentées dans un unique actionneur.

En alternative ou en complément, la commande des actionneurs 23-1, 23-2 et/ou 23-3 peut être manuelle, notamment un utilisateur peut déclencher le changement de configuration des actionneurs via une interface dédiée.

Ainsi, le système selon l'invention peut comprendre au moins une interface homme-machine 42, 44, du type connu, configurée pour piloter les actionneurs 23-1, 23-2 et/ou 23-3.

Dans le système selon l'invention, le dispositif de commande électropneumatique 43, 45 est configuré pour recevoir les mesures des premier et deuxième capteurs 24-1, 24-2 et pour :
- commander le passage du premier actionneur 23-1 en configuration de gonflage lorsque la pression mesurée par le premier capteur 24-1 est inférieure à un seuil prédéterminé et déclencher le compresseur haute pression 41 de sorte que la pression de la deuxième zone de gonflage soit sensiblement égale à un seuil prédéterminé,
- commander le passage du premier actionneur 23-1 en configuration de regonflage lorsque la pression mesurée par le deuxième capteur 24-2 est inférieure à un seuil prédéterminé de sorte que la pression de la première zone de gonflage 2-1 soit sensiblement égale à un seuil prédéterminé,
- commander le deuxième actionneur 23-2, simultanément au passage en configuration de gonflage ou de regonflage du premier actionneur 23-1, pour empêcher le passage du fluide de la liaison pneumatique 20 jusque dans la première zone de gonflage 2-1.

Les dispositifs de commande électropneumatique 43, 45 peuvent ainsi comprendre un récepteur relié par un bus de communication R1 filaire ou sans fil aux premier et deuxième capteurs 24-1, 24-2 du dispositif pneumatique 1 selon l'invention. Les signaux émis par les premier et deuxième capteurs 24-1, 24-2 peuvent être traités par le dispositif de commande électropneumatique 43, 45 pour commander le premier, le deuxième et/ou le troisième actionneur 23-1, 23-2, 23-3. En outre, les premier et deuxième capteurs 24-1, 24-2 du dispositif pneumatique 1 selon l'invention peuvent être configurés pour communiqués les mesures de pression à l'interface homme-machine 42, 44.

Dans un mode de réalisation du système selon l'invention, celui-ci peut comprendre deux dispositifs de commande électropneumatique 43, 45, un premier dispositif de commande électropneumatique 43 pour piloter le premier actionneur 23-1 et le deuxième actionneur 23-2 et un deuxième dispositif de commande électropneumatique 45 pour piloter le troisième actionneur 23-3. De manière préféré, le deuxième actionneur 23-2 est configuré pour être en position ouverte et pour passer en configuration fermée lorsque l'actionneur 23-1 passe en configuration de gonflage ou de regonflage.

Les premier et deuxième capteurs 24-1, 24-2 peuvent être des capteurs de pression mais peuvent également être configurés pour mesurer d'autres paramètres telle que par exemple la température.

Le système selon l'invention peut en outre comprendre des capteurs tiers reliés, à l'instar des premier et deuxième capteurs 24-1, 24-2, au dispositif de commande électropneumatique 43, 45. Les capteurs tiers peuvent émettre des signaux qui peuvent être prise en considération par le dispositif de commande électropneumatique 43, 45 pour commander les différents actionneurs 23-1, 23-2 et/ou 23-3. En l'occurrence, les capteurs tiers peuvent comprendre un capteur de vitesse, un capteur de terrain configuré pour déterminer une typologie de sol (par exemple un sol de type route composée d'asphalte, de goudron ou de bitume, ou un sol de type tout terrain plutôt composé de terre), un capteur de charge et/ou un capteur d'humidité.

Ainsi, il est possible de commander le passage du premier actionneur 23-1 en configuration de gonflage ou de regonflage et simultanément la fermeture du deuxième actionneur 23-2. Il est également possible de commander le troisième actionneur 23-3 pour permettre un dégonflage ou un regonflage du corps de pneu 2 en fonction des signaux émis par les premier et deuxième capteurs 24-1, 24-2 seuls ou en combinaison avec les signaux émis par les capteurs tiers.

Les dispositifs de commande électropneumatique 43, 45 peuvent par exemple commander le passage du premier actionneur 23-1 en configuration de regonflage pour mettre en communication fluidique la deuxième zone de gonflage, constituée par l'enveloppe additionnelle 30, avec la première zone de gonflage 2-1 à travers l'ouverture simultanée des conduits de gonflage 21-2 et de regonflage 21-3. Lorsque la valeur de pression prédéterminée dans le corps de pneu 2 est atteinte, le dispositif de commande électropneumatique 43, 45 commande la fermeture de l'actionneur 23-1.

Selon un quatrième objet, l'invention porte sur un véhicule comprenant un système de contrôle de la pression d'un pneu selon l'invention. Lorsque le système selon l'invention comporte plusieurs dispositifs de commande életropneumatiques 43, 45, ainsi que plusieurs interfaces Homme Machine 42, 44, ces derniers peuvent être respectivement regroupés en une seule interface. Cependant, lorsque le système selon l'invention comprend un seul dispositif de commande électropneumatique 45 avec une interface homme machine 44, ces derniers peuvent être ajoutés à un dispositif de commande électropneumatique et à une interface homme machine dédiée préexistant. Dans ce cas, les premier et deuxième actionneurs 23-1 et 23-2 ainsi que les liaisons pneumatiques correspondantes permettant de se connecter à la deuxième zone de gonflage.

Le véhicule peut correspondre à tout type de véhicule connu équipé d'une ou de plusieurs roues.

L'invention peut faire l'objet de nombreuses variantes et applications autres que celles décrites ci-dessus. En particulier, sauf indication contraire, les différentes caractéristiques structurelles et fonctionnelles de chacune des mises en oeuvre décrite ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Dispositif pneumatique (1) pour jante de roue (10) adaptée pour fixer un corps de pneu (2) de manière à définir une première zone de gonflage (2-1), ledit dispositif comprenant une liaison pneumatique (20) et une enveloppe additionnelle (30) adaptée pour supporter une pression de service au moins trois fois supérieure à la pression maximale de la première zone de gonflage et définissant une deuxième zone de gonflage, l'enveloppe additionnelle (30) étant en outre agencée pour entourer un élément de la jante de roue (10) et communiquer fluidiquement avec la liaison pneumatique (20), ladite liaison pneumatique étant adaptée pour délivrer un fluide issu d'une station de gonflage (40), le dispositif pneumatique (1) étant **caractérisé en ce que** la liaison pneumatique (20) comprend une première voie de communication fluidique (21-1), reliée à un premier actionneur (23-1), assurant le passage du fluide de la liaison pneumatique (20) jusque dans la deuxième zone de gonflage de l'enveloppe additionnelle (30) par un conduit de gonflage (21-2) relié au premier actionneur (23-1) ou de la deuxième zone de gonflage de l'enveloppe additionnelle (30) à la première zone de gonflage (2-1) par un conduit de regonflage (21-3) relié au premier actionneur (23-1) et, une deuxième voie de communication fluidique (22-1), reliée à un deuxième actionneur (23-2), assurant le passage du fluide de la liaison pneumatique (20) jusque dans la première zone de gonflage (2-1), et dans lequel:
- le premier actionneur (23-1) est configuré pour passer d'une configuration dite de gonflage, dans laquelle le conduit de gonflage (21-2) est en position ouverte et le conduit de regonflage (21-3) est en position fermée, à une configuration dite de regonflage, dans laquelle les conduits de gonflage (21-2) et de regonflage (21-3) sont en position ouverte et dans laquelle la première voie de communication fluidique (21-1) est obturée de sorte que la pression exercée dans la liaison pneumatique (20) entraine le passage du fluide de la deuxième zone de gonflage vers la première zone de gonflage (2-1),
- le deuxième actionneur (23-2) est configuré pour empêcher le passage du fluide de la liaison pneumatique (20) jusque dans la première zone de gonflage (2-1), lorsque le premier actionneur (23-1) est dans la configuration de gonflage ou de regonflage.

2. Dispositif pneumatique (1) selon la revendication 1, dans lequel l'élément de la jante de roue (10) correspond à un pourtour d'une base creuse (11), de préférence le pourtour extérieur de la base creuse (11).

3. Dispositif pneumatique (1) selon la revendication 1 ou 2, dans lequel l'enveloppe additionnelle (30) est formée par un enroulement d'une structure tubulaire qui comprend une ou plusieurs spires (31).

4. Dispositif pneumatique (1) selon la revendication 3, dans lequel la structure tubulaire de l'enveloppe additionnelle (30) comprend un diamètre intérieur allant de 10 mm à 250 mm, de préférence de 20 mm à 100 mm.

5. Dispositif pneumatique (1) selon l'une quelconque des revendications 1 à 3, dans lequel l'enveloppe additionnelle (30) est composée d'au moins un matériau adapté pour supporter plus de trois fois la pression de service maximale prévue pour le corps de pneu (2).

6. Dispositif pneumatique (1) selon l'une quelconque des revendications 1 à 5, dans lequel la liaison pneumatique (20) est reliée fluidiquement à un joint tournant (50) à un seul passage pneumatique agencé pour délivrer le fluide issu de la station de gonflage (40) aux première et deuxième voies de communication fluidique (21-1, 22-1), ledit joint tournant étant en outre agencé pour faire la liaison entre une partie fixe de roue, de préférence un moyeu (60), et une partie tournante (61) de roue.

7. Dispositif pneumatique (1) selon l'une quelconque des revendications 1 à 6, dans lequel la jante de roue (10) comprend un premier capteur (24-1) configuré pour mesurer la pression de l'enveloppe additionnelle (30), le premier actionneur (23-1) étant en outre configuré pour passer en configuration de gonflage lorsque la pression mesurée par le premier capteur (24-1) est inférieure à un seuil prédéterminé.

8. Dispositif pneumatique (1) selon la revendication 7, dans lequel la jante de roue (10) comprend un deuxième capteur (24-2) configuré pour mesurer la pression de la première zone de gonflage (2-1), le premier actionneur (23-1) étant en outre configuré pour passer en configuration de regonflage lorsque la pression mesurée par le deuxième capteur (24-2) est inférieure à un seuil prédéterminé.

9. Roue de véhicule comprenant un dispositif pneumatique (1) selon l'une quelconque des revendications 1 à 8 et une jante de roue (10).

10. Système de contrôle de la pression d'un pneu comprenant une roue de véhicule équipée d'un pneu monté sur une jante de roue (10) et un dispositif pneumatique (1) selon la revendication 8, ledit système comprenant en outre une station de gonflage (40) comportant un compresseur haute-pression (41) relié fluidiquement à la liaison pneumatique (20), au moins un dispositif de commande électropneumatique (43, 45) configuré pour recevoir les mesures des premier et deuxième capteurs (24-1, 24-2) et pour :
- commander le passage du premier actionneur (23-1) en configuration de gonflage lorsque la pression mesurée par le premier capteur (24-1) est inférieure à un premier seuil prédéterminé et déclencher le compresseur haute pression (41) de sorte que la pression de la deuxième zone de gonflage soit sensiblement égale à un seuil prédéterminé,
- commander le passage du premier actionneur (23-1) en configuration de regonflage lorsque la pression mesurée par le deuxième capteur (24-2) est inférieure à un deuxième seuil prédéterminé de sorte que la pression de la première zone de gonflage (2-1) soit sensiblement égale à un seuil prédéterminé,
- commander le deuxième actionneur (23-2), simultanément au passage en configuration de gonflage ou de regonflage du premier actionneur (23-1), pour empêcher le passage du fluide de la liaison pneumatique (20) jusque dans la première zone de gonflage (2-1).

11. Système de contrôle de la pression selon la revendication 10, ledit système comprenant au moins un capteur tiers configuré pour déterminer une vitesse, une charge et/ou une typologie de sol, le dispositif de commande électropneumatique (43, 45) étant en outre configuré pour recevoir les mesures du capteur tiers et pour commander le passage du premier actionneur (23-1) en configuration de gonflage ou de regonflage et commander le deuxième actionneur (23-2) en fonction d'une valeur mesurée par le capteur tiers.

12. Véhicule comprenant un système de contrôle de la pression de pneus selon l'une des revendications 10 ou 11.
